Europäisches Patentamt

European Patent Office

Office européen des brevets

(11) Publication number : **0 517 518 A2**

# (12) EUROPEAN PATENT APPLICATION

(21) Application number : **92305129.6**

(22) Date of filing : **04.06.92**

(51) Int. Cl.⁵ : **G02F 1/37**

(30) Priority : **04.06.91 JP 159530/91**

(43) Date of publication of application :
**09.12.92 Bulletin 92/50**

(84) Designated Contracting States :
**DE FR GB**

(71) Applicant : **International Business Machines
Corporation
Old Orchard Road
Armonk, N.Y. 10504 (US)**

(72) Inventor : **Taira, Yoichi
6-8-8 Kamisoshigaya
Setagaya-ku, Tokyo (JP)**

(74) Representative : **Blakemore, Frederick
Norman
IBM United Kingdom Limited Intellectual
Property Department Hursley Park
Winchester Hampshire SO21 2JN (GB)**

(54) **Apparatus and method for wavelength conversion of coherent light.**

(57)   A method and apparatus for wavelength conversion of coherent light which can prevent optical destruction of a wavelength conversion element (14) and achieve a high wavelength conversion efficiency. The apparatus for wavelength conversion of coherent lights in the present invention has an optical focusing system for focusing the input coherent light on the wavelength conversion element in an optical cavity (15), which optical focusing system makes the cross-sectional shape of a light beam non-circular, preferably, elliptical.

FIG. 3

The present invention relates to a method and apparatus for converting the wavelength of laser light, and particularly, to a method and apparatus for wavelength conversion of laser light which can obtain a high wavelength conversion efficiency while preventing the optical destruction of a wavelength conversion element converting the wavelength of laser light.

It has so far been known that when a strong coherent light such as a laser light passes through a medium having a secondary non-linear optical effect (or a wavelength conversion element, hereinafter simply referred to as a crystal because such medium is often an optical crystal), such crystal generates a light wave with a frequency double the frequency of the input light, or a light wave having a frequency which is the sum or difference of the frequencies of two input components if the input light includes a plurality of frequency components. These are called the generation of a second harmonic, generation of a sum frequency, and generation of a difference frequency, respectively. To enhance the conversion efficiency of these, or the ratio of the converted output light intensity of a new freqency to the input light intensity, it is necessary to satisfy a condition called phase match.

The condition for phase match is that the refractive indexes of a crystal for a fundamental wave (input light) and a generated second harmonic (output light) are equal in the case of the generation of the second harmonic. Such phase match can be accomplished by utilising the birefringence of a crystal, for instance, by using an ordinary ray as the fundamental wave (input light) and an extraordinary ray as the second harmonic (output light). Depending on the crystal type, by appropriately selecting the orientation and temperature of the crystal, this phase match condition can be achieved in a certain predetermined wavelength range of the input light. Particularly, the crystal which accomplishes the phase match condition by changing the crystal orientation is called an angle phase match type.

As an example of the angle phase match type crystal, there is beta-barium borate ($\beta$-BaB$_2$O$_4$) (hereinafter referred to as BBO). BBO has several excellent features as a wavelength conversion element. That is, it is a uniaxial crystal that has a large non-linear susceptibility to the ultraviolet region, a wide transparency region, phase match in a wide wavelength range, chemical stability, and a relatively high optical destruction strength. It was proposed in the past to use such BBO as a wavelength conversion element in combination with an optical cavity having a plurality of reflecting surfaces for converting laser light (H. Souma, T. Sato, T. Nishimata, I. Shindo: Proceeding of International Quantum Electronics Conference 1988 Tokyo, PD-7 (1988) 19-22).

However, if the intensity of the input light is low, the intensity of the output light of the wavelength converter is proportional to the square of the intensity of the input light. If a low-intensity light from a continuous-wave laser is used as the input light, the conversion efficiency is extremely low. Accordingly, for high conversion efficiency, it is necessary to use an optical focusing system in combination with an optical cavity to focus the fundamental wave (input light) on the crystal. However, since the intensity of the light within the optical cavity is much larger than that of the output light which is actually emitted to the outside of the cavity, the crystal is destroyed or damaged by the light beam if the light within the cavity is focused to one point on the crystal by an optical focusing system having spherical lenses.

As a result, the practical conversion efficiency of an apparatus for wavelength conversion of laser light is determined by the optical destruction or damage condition of the crystal.

On the other hand, it has been proposed that light be focused on a non-liner optical crystal (such as BBO), which is a wavelength conversion element, by using cylindrical lenses (T. G. M. Freegarde, J. Courts, A Corney, "Second Harmonic Generation in Beta-Barium Borate using Elliptical Focusing, "Non-linear Optical Properties of Materials, 1988 Technical Digest Series Volume 9, August 22-25, 1988, Troy, New York, pp. 77-80" and V. D. Volosov, E.V. Nilov, "Effect of the Spatial Structure of a Laser Beam on the Second Harmonic in ADP and KDP Crystals," Optical Spectroscopy (USSR) Vol.21 (1966), pp. 392-394). However, in prior art, placing a wavelength conversion element in the optical cavity was not considered, and thus light was not strongly amplified and the optical destruction of the wavelength conversion element was not a significant problem. In addition, in these prior examples, there was no suggestion with respect to the enhancement of the wavelength conversion efficiency of continuous-wave laser lights of relatively low outputs.

Viewed from one aspect the present invention provides apparatus for converting the wavelength of coherent light comprising: means for generating at least one beam of input coherent light, a crystal wavelength conversion element; means for focusing the input coherent light onto the wavelength conversion element so as to produce an output beam of coherent light having a different wavelength from the input coherent light, characterised in that the conversion element has an acceptance angle which varies from a first relatively small magnitude in a first plane of the element to a second relatively large magnitude in a second plane of the element, the focusing means being such as to focus the input light to have an elongate cross-section oriented such that the input light is incident at a wider angle in the second plane than in the first plane.

Viewed from another aspect the present invention provides a method for converting the wavelength of coherent light comprising the step of: generating at least one beam of input coherent light; focusing the input coherent light into a crystal wavelength conversion element so as to produce an output beam of coherent light having a different wavelength from the input coherent light, characterised in that the focusing step comprises focusing the input light to have an elongate cross-section and to be oriented such that the input light is incident a wider angle, in one plane of the acceptance angle of the conversion element than in a second plane of the acceptance angle of the conversion element.

In order that the invention may be fully understood preferred embodiments thereof will now be described, by way of example only, with reference to the accompanying drawings in which:

Figure 1 shows a crystal which is a wavelength conversion element and the acceptance angle thereof;

Figure 2 shows an illustration showing the focusing by lenses and the focusing angle thereof;

Figure 3 shows apparatus for converting laser light in accordance with a preferred embodiment of the present invention;

Figure 4 shows apparatus for converting laser light in accordance with another embodiment of the present invention;

Figure 5 shows apparatus for converting laser light in accordance with another embodiment of the present invention;

Figure 6 shows apparatus for converting laser light in accordance with another embodiment of the present invention;

Figure 7 shows apparatus for conversion of laser light in accordance with another embodiment of the present invention; and

Figure 8 shows apparatus for conversion of laser light in accordance with yet another embodiment of the present invention.

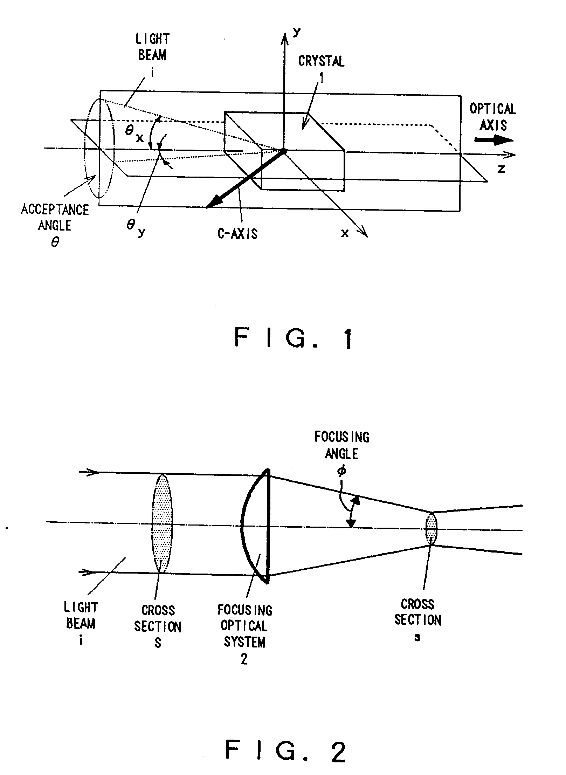

The present invention will now be described with reference to the accompanying drawings. At first, the principle of the present invention is described. Fig. 1 is an illustration showing the reception angle of a crystal used in the present invention. Figure 2 is an illustration showing the principle of the optical focusing system using a cylindrical lens according to the present invention.

As shown in Fig. 1, The crystal 1 has an angle range, or acceptance angle $\theta$, in which it can effectively convert the wavelength of focused input light i. The crystal can effectively perform the wavelength conversion only of the focused input light i in the range of the acceptance angle $\theta$. Accordingly, it is necessary to select the magnitude of the focusing angle $\phi$ of the focusing optical system 2 in Fig. 2 in the relationship of $\theta$ so that the focused input light i falls within the range of acceptance angle $\theta$. If the relationship $\theta$ is maintained, the efficiency is increased S/s times by the optical focusing system 2. Here, S is the cross-sectional area of input light i before focusing, and s is the cross-sectional area of input light i at the place at which it was focused onto the crystal 1.

However, the acceptance angle $\theta$ of the actual crystal 1 has a directional property, and acceptance angle $\theta_y$ in the plane including the C-axis of crystal 1 and optical axis Z (ZX-plane) and acceptance angle $\theta_x$ in the plane perpendicular to the ZX-plane and including optical axis Z (YZ-plane) have different magnitudes. Usually, the relationship is $\theta_x$. Particularly, for a crystal of the angle phase match type, $\theta_x$ and $\theta_y$ is very small as compared with $\theta_x$. Accordingly, the focusing in the YZ-plane determines the conversion efficiency and focusing in the ZX-plane is not effective in increasing the conversion efficiency. This is because the focusing angle $\phi$ exceeds $\theta_y$ even if it is of a slight magnitude and results in a relationship $\theta_x$, and thus most of the focusing in the $\theta_y$ direction or in the ZX-plane falls outside the range of the acceptance angle $\theta_y$. To focus input beam i under an optimum condition in response to such a relationship of acceptance angles $\theta_x$ and $\theta_y$ of crystal 1, it is necessary to provide a directional property in the focusing of the light beam. That is, it is preferable to use an optical focusing system which includes a cylindrical lens or cylindrical mirror for making the shape of the cross-sectional area of the focused beam non-circular, preferably, elliptical.

In addition, the shape of the cross-sectional area of the focused beam using a cylindrical lens becomes elliptical and a larger optical energy is dispersed when compared to the cross-sectional area of the focused beam formed by the optical focusing system of a spherical lens that provides a focusing to one point, and thus the optical destruction of the crystal can be prevented.

This is advantageous if a wavelength conversion element is placed in an optical cavity and a continuous-wave laser light is focused by an optical focusing system to enhance conversion efficiency. The reason for this is that, if a spherical lens focusing system is used to continuously focus the input laser light of a continuously output laser to BBO existing in the optical cavity, the light intensity within BBO exceeds the strength that causes optical destruction.

However, if a cylindrical lens of the same focal length is used, the light intensity at the focal point decreases as compared with the spherical lens, and thus optical damage can be avoided without reducing the conversion efficiency when light is focused on BBO using a continuous light.

The reason is that the cylindrical lens weakens the focusing in one direction (ZX-plane) of BBO as compared with that in the other direction (ZY-plane), but the focusing in the ZX-plane originally does not contribute very much to the conversion efficiency. In the other direction (in the ZY-plane) contributing to the conversion, the focusing is similar to that produced by a spherical lens.

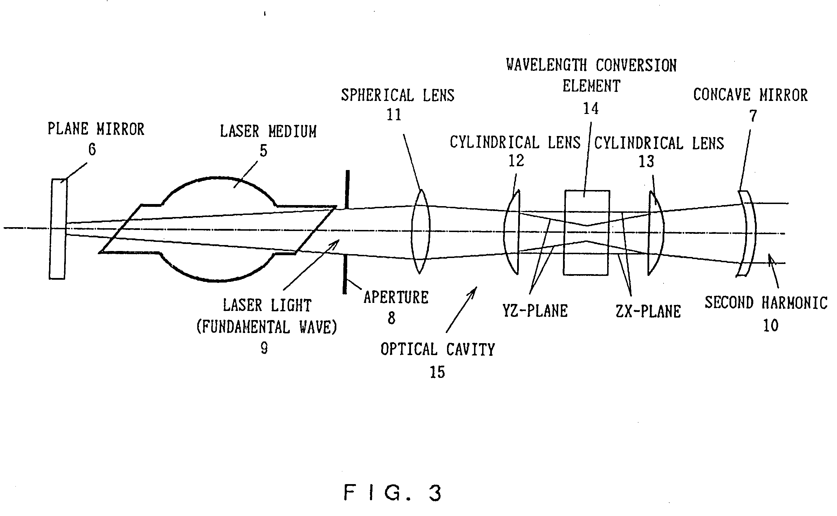

Fig. 3 shows an apparatus for generating a coherent light according to a preferred embodiment of the present invention. 5 is a plasma tube having a laser medium therein, and it may be a continuous-wave argon laser. This argon laser may be one which generates a coherent continuous-wave (CW) laser light 9 having an output of 1W and a wavelength of $\mu1$ in the range of visible light (e.g. 514.5nm, fundamental wave). 6 is a plane mirror which is a highly reflective of a light having a wavelength of $\mu1$ and of deep ultraviolet light with a second harmonic wavelength of $\mu1$ (wavelength $\mu2 = 257$nm). 7 is a concave mirror which is highly reflective of light having a wavelength of $\mu1$, but exhibits a high degree of transmissibility to light having a wavelength of $\mu2$. Accordingly, concave mirror 7 is the output mirror of light 10 having a wavelength of $\mu2$. 8 is an aperture. 11 is a spherical lens. 12 and 13 are cylindrical lenses. 14 is BBO which is a wavelength conversion element, and BBO 14 is sandwiched by cylindrical lenses 12 and 13. Between optical reflecting surfaces 6 and 7, laser medium 5, aperture 8, spherical lens 11, cylindrical lenses 12 and 13, and BBO 14 are placed. Optical reflecting surfaces 6 and 7 form therebetween a Fabry-Perot type optical cavity 15 which produces a standing wave with a wavelength of $\mu1$. Cylindrical lenses 12 and 13 focus laser light 9 having a wavelength of $\mu1$ from laser medium 5 which goes back and forth in the cavity 15 to BBO 14.

Cylindrical lenses 12 and 13 make the cross-sectional shape of the focused laser light beam elliptical. That is, the component of light 9 in the YZ-plane direction of BBO 14 largely converges, but the component of light 9 in the ZX-plane direction of BBO 14 does not converge as much. The reason is that, the directional component $\theta_y$ of the acceptance angle is very small as compared with $\theta_x$ in angle phase match type crystals (BBO is one of them), as shown in Fig. 1, and thus the focusing in the ZX-plane direction does not contribute to the increase of the conversion efficiency of BBO as compared with the focusing in the YZ-plane direction. The focusing in the ZX-plane direction only enhances the light intensity in BBO, and contributes to optical damage. Cylindrical lenses 12 and 13 of this embodiment focus the light 9 on BBO by reducing the focusing in the ZX-plane to avoid energy concentration thereby preventing optical destruction, while they enhance the focusing rate to increase the wavelength conversion efficiency in the YZ-plane where $\theta_x$ is large.

When a 1W laser light 9 of a visible wavelength of 514.5nm generated by argon laser medium 5 was made into a light beam of a 2mm-diameter by the use of aperture 8 and spherical lens 11 and focused on BBO 14 (the length is made 6.5mm) using a pair of cylindrical lenses 12 and 13 having a focal length of 50mm, a 125$\mu$W coherent second harmonic 10 having a wavelength of 257nm in the deep ultraviolet region was obtained. The second harmonic 10 is obtained from output mirror 7.

This has substantially the same magnitude as the second harmonic output which is obtained when the focusing is done using a pair of spherical lenses having the same focal length instead of cylindrical lenses. However, the light intensity at the focal point for cylindrical lenses is 1/80 as compared with spherical lenses. Accordingly, the light intensity in BBO 14 disposed within optical cavity 15 decreases from 8MW/cm$^2$ for spherical lenses to approx. 100 kW/cm$^2$, and BBO does not undergo optical destruction.

Thus, there is little difference in efficiency between cylindrical lenses and spherical lenses when the second harmonic of a light of a visible wavelength in the vicinity of 500nm is generated by using BBO, and a highly efficient optical cavity which suffers from no optical damage can be used to generate a deep ultraviolet light from an argon laser if a focusing system using cylindrical lenses is used.

In accordance with the present invention, optical damage of the BBO can be prevented without reducing the wavelength conversion efficiency. Consequently, if an appropriate coating is applied to the lenses, BBO and the reflecting mirrors in the optical cavity can reduce the optical loss in the cavity and a deep ultraviolet light of 1W or higher (second harmonic of a laser-oscillated light) can easily be generated by using a continuous output type argon laser. This conversion output light in the deep ultraviolet region can also be applied to photolithography and other various applications.

Although the second harmonic conversion of the input laser light is described here, if the input laser light has a plurality of frequencies, that is, if laser medium 5 oscillates laser light by multi-lines, wavelength conversion element 14 can also perform other wavelength conversion such as generation of the sum frequency or difference freqency of two frequencies thereof. It is apparent that the present invention can be applied to not only the second harmonic conversion but also to other wavelength conversion.

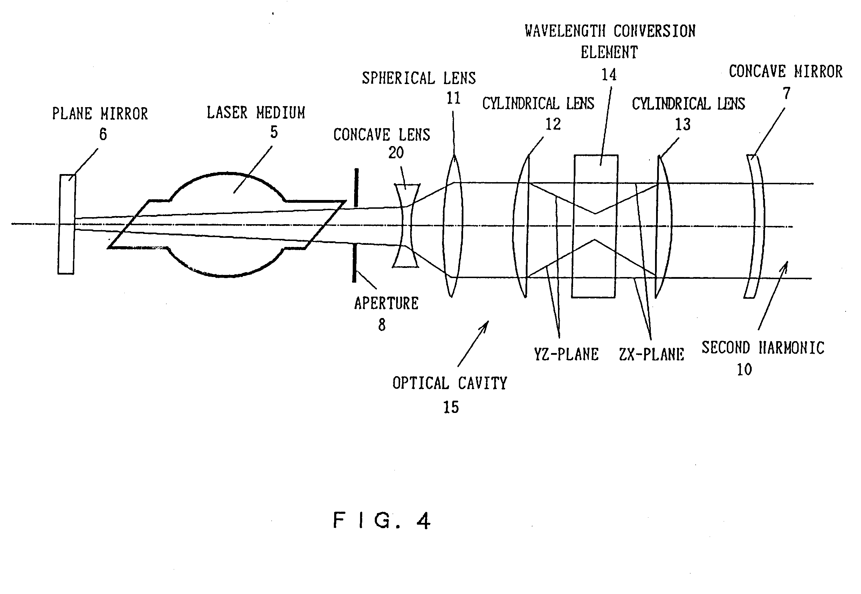

Fig. 4 shows the second embodiment of the present invention. The construction which are the same as the embodiment in Fig. 3 are assigned the same reference numerals as in Fig. 3 and the description thereof is omitted. The embodiment is an arrangement which reversely expands the light beam in the ZX-plane to prevent damage to crystal 14. This is because the acceptance angle $\theta_y$ of crystal 14 is very small. For this purpose, concave lens 20 is placed between aperture 8 and spherical lens 11. Accordingly, in this embodiment the focusing on crystal 14 is done only in the ZY-plane.

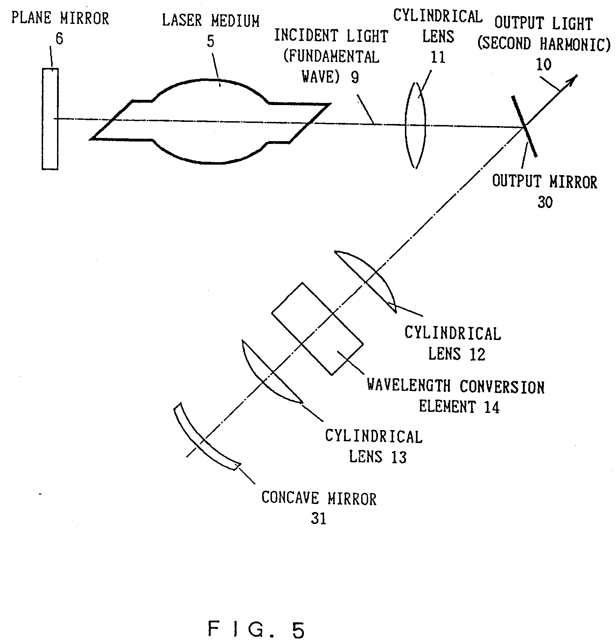

Fig. 5 shows another embodiment of the present invention. The constructions which are the same as the embodiment in Fig. 3 are assigned the same reference numerals and the description thereof is omitted. In this embodiment, to decrease the length of the whole apparatus for generating coherent light, output mirror 30 used for extracting second harmonic 10 is provided in the centre of optical cavity 15. This output mirror 30 is highly reflective for fundamental wave 9 with a wavelength of $\mu 1$ and exhibits a high level of permissively to second harmonic 10 with a wavelength of $\mu 2$. Concave mirror 31 is highly reflective of both fundamental wave 9 and second harmonic 10. If a mirror which is transparent to second harmonic 10 is used as mirror 31, second harmonic 10 can also be obtained from the mirror 31.

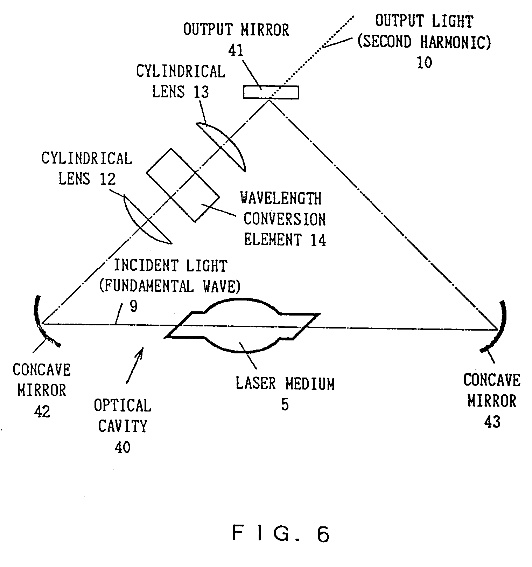

Fig. 6 shows another embodiment of the present invention. The constructions which are the same as the embodiment of Fig. 3 are assigned the same reference numerals and the description thereof is omitted. Since, in this embodiment, optical cavity 40 has a ring-type construction such that light circulates only in one direction, second harmonic 10 is also emitted in one direction. This is convenient. 41 is an output mirror which is highly reflective of fundamental wave 9 and exhibits a high degree of permissively to second harmonic 10. 42 and 43 are concave mirrors which are highly reflective of both fundamental wave 9 and second harmonic 10.

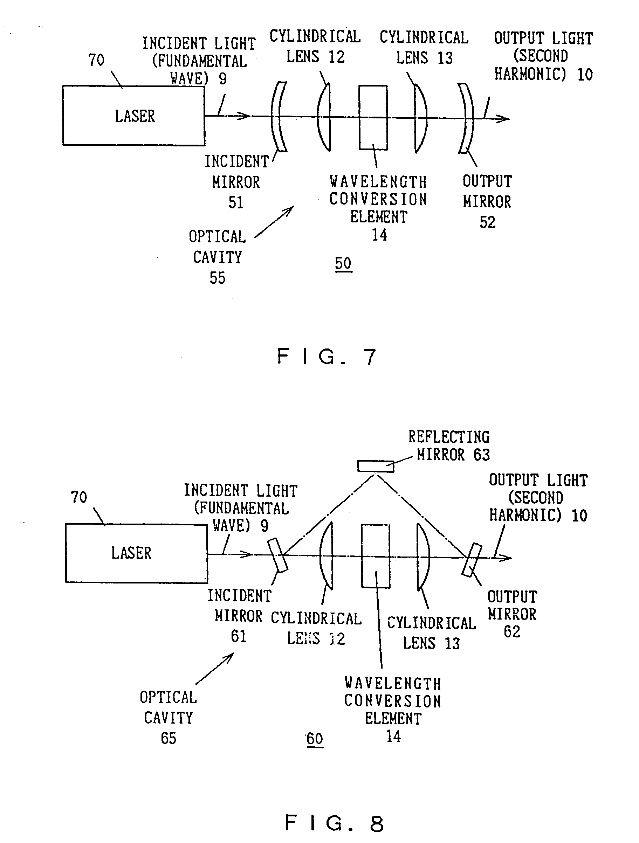

Figs. 7 and 8 show other embodiments of the present invention. The constructions which are the same as the embodiment of Fig. 3 are assigned the same reference numerals and the description thereof is omitted. In the embodiments of Figs. 7 and 8, an apparatus for wavelength conversion of laser light 50 or 60 having crystal 14, the pair of cylindrical lenses 12 and 13 for focusing on crystal 14, and reflecting mirrors 51, 52 or 61, 62,63 forming optical cavity 55 or 65 including crystal 14 and cylindrical lenses 12 and 13 therein is provided with an outside laser light source 70 and converts the laser light (fundamental wave) 9 from laser light source 70 to its second harmonic 10. Wavelength conversion apparatus 50 of Fig. 7 forms a Fabry-Perot type optical cavity. The wavelength conversion apparatus 60 of Fig. 8 forms a ring-type optical cavity. Reflecting mirrors 51 and 61 are entrance mirrors which introduce fundamental wave 9 into the cavity 55 or 65, and are highly reflective of both fundamental wave 9 and the second harmonic 10 in cavity 55 or 65. Output mirrors 52 and 62 are highly reflective of fundamental wave 9 and have a high degree of transparency to second harmonic 10. Reflecting mirror 63 is highly reflective of both fundamental wave 9 and second harmonic 10.

In the above description of the embodiments, the pair of cylindrical lenses 12 and 13 of the focusing optical system may be replaced by semitransparent cylindrical mirrors.

As described above, the present invention produces an advantage in apparatus for non-linear optical wavelength conversion which uses an optical cavity and a wavelength conversion element of a non-linear optical element placed in the optical cavity, particularly, an angle phase match type crystal. The effect of optical destruction liable to occur in the conversion element by the amplified light intensity in the cavity can be made less while still obtaining a high wavelength conversion efficiency. The wavelength conversion apparatus of the present invention is most effective when the wavelength conversion of a continuous-wave weak light is accomplished by using an angle phase match type wavelength conversion element in a wavelength region where the highly efficient 90-degree phase match type conversion element is not available or is difficult to use. An example of such is the generation of the second harmonic of an argon laser. This second harmonic exists in the deep ultraviolet region and many application such as photolithography and other optical treatments can be thought of. It can also apply to the wavelength conversion laser or into the visible light region.

Apparatus has been described for wavelength conversion of laser light which can prevent the optical destruction of a crystal, which is a conversion element, and obtain a high wavelength conversion efficiency. The apparatus converts wavelength of laser light which can efficiently convert continuous-wave laser lights, or generates a coherent light which can efficiently convert laser light and output continuous-wave laser light. The apparatus can double the frequency of an input or generated visible laser light and convert to or output coherent light having intensity of 1W or larger in the deep ultraviolet region.

Thus, apparatus for wavelength conversion of laser light or the apparatus for generating a coherent light according to the present invention has an optical focusing system for focusing input light on a crystal within an optical cavity. This optical focusing system includes means for making the cross section of the focused light beam non-circular, preferably, elliptical. In accordance with the present invention, input light beam focused on the crystal has a non-circular cross section such as ellipse. Therefore, the light energy within the optical cavity is not focused to one point in the crystal. Accordingly, the optical destruction due to the focusing of the energy of the light beam within the optical cavity at one point in the crystal can be prevented. In addition, even if a directional property is provided in the focusing of the light beam focused on the crystal as in the present invention, the wavelength conversion efficiency is unchanged. Since the crystal has a directional property in the angle at which the crystal can receive the light to be subjected to wavelength conversion, or the acceptance angle, the conversion efficiency of the crystal is not different from a light beam of a circular cross section if the light beam is focused so as to match the acceptance angle. Moreover, light from additional directions are not focused, and accordingly the concentration of light energy can be prevented thereby preventing optical destruction.

**Claims**

1. Apparatus for converting the wavelength of coherent light comprising:

   means for generating at least one beam of input coherent light

   a crystal wavelength conversion element;

   means for focusing the input coherent light onto the wavelength conversion element so as to produce an output beam of coherent light having a different wavelength from the input coherent light,

   characterised in that the conversion element has an acceptance angle which varies from a first relatively small magnitude in a first plane of the element to a second relatively large magnitude in a second plane of the element, the focusing means being such as to focus the input light to have an elongate cross-section oriented such that the input light is incident at a wider angle in the second plane than in the first plane.

2. Apparatus as claimed in claim 1 wherein the elongate cross-section is an ellipse.

3. Apparatus as claimed in any of claims 1 or 2 wherein the wavelength conversion element is an angle phase match type non-linear optical element.

4. Apparatus as claimed in claim 3 wherein the angle phase match type non-linear optical element is a beta-barium borate crystal.

5. Apparatus as claimed in any of the preceding claims wherein the output beam of coherent light is the second harmonic of the beam of input coherent light.

6. Apparatus as claimed in any of claims 1 to 4 wherein the output beam of coherent light has a frequency which is the sum of two frequencies of two input beams of coherent light.

7. Apparatus as claimed in any of the preceding claims wherein the output beam of coherent light has a shorter wavelength than the input coherent light.

8. Apparatus as claimed in any of claims 1 to 4 wherein the output beam of coherent light has a frequency which is the difference of two frequencies of two input beams of coherent light.

9. Apparatus as claimed in any of the preceding claims wherein the focusing means comprises, a pair of cylindrical lenses, one of the lenses positioned on either side of the wavelength conversion element.

10. Apparatus as claimed in any of the preceding claims further comprising a pair of reflecting surfaces, one of the reflecting surfaces, positioned on either side of the wavelength conversion element and focusing means.

11. Apparatus as claimed in claim 10 wherein the pair of reflecting surfaces is a pair of cylindrical mirrors.

12. Apparatus as claimed in any of the preceding claims wherein the means for generating at least one beam of input coherent light is a continuous wave argon laser.

13. An apparatus for converting wavelength of laser light, comprising:

    a plurality of reflecting surfaces;

    a wavelength conversion element interposed between said reflecting surfaces;

    an optical focusing system for focusing said laser light on said wavelength conversion element; and means in said optical focusing system for making the cross section of said laser light focused on said wavelength conversion element non-circular.

14. A method for converting the wavelength of coherent light comprising the steps of:

    generating at least one beam of input coherent light;

    focusing the input coherent light into a crystal wavelength conversion element so as to produce an output beam of coherent light having a different wavelength from the input coherent light,

    characterised in that the focusing step comprises focusing the input light to have an an elongate cross-section and to be oriented such that the input light is incident a wider angle, in one plane of the acceptance angle of the conversion element than in a second plane of the acceptance angle of the conversion element.

15. A method as claimed in claim 14 wherein the focusing step comprises focusing the input light to have an elliptical cross-section.

# F I G. 1

# F I G. 2

EP 0 517 518 A2

PLANE MIRROR 6 — LASER MEDIUM 5 — SPHERICAL LENS 11 — WAVELENGTH CONVERSION ELEMENT 14 — CONCAVE MIRROR 7 — CYLINDRICAL LENS 12 — CYLINDRICAL LENS 13 — LASER LIGHT (FUNDAMENTAL WAVE) 9 — APERTURE 8 — OPTICAL CAVITY 15 — YZ-PLANE — ZX-PLANE — SECOND HARMONIC 10

F I G. 3

F I G. 4

PLANE MIRROR
6

LASER MEDIUM
5

INCIDENT LIGHT
(FUNDAMENTAL
WAVE) 9

CYLINDRICAL
LENS
11

OUTPUT LIGHT
(SECOND HARMONIC)
10

OUTPUT MIRROR
30

CYLINDRICAL
LENS 12

WAVELENGTH CONVERSION
ELEMENT 14

CYLINDRICAL
LENS 13

CONCAVE MIRROR
31

F I G. 5

OUTPUT MIRROR
41

OUTPUT LIGHT
(SECOND HARMONIC)
10

CYLINDRICAL
LENS 13

CYLINDRICAL
LENS 12

WAVELENGTH
CONVERSION
ELEMENT 14

INCIDENT LIGHT
(FUNDAMENTAL WAVE)
9

CONCAVE
MIRROR
42

OPTICAL
CAVITY
40

LASER MEDIUM
5

CONCAVE
MIRROR
43

F I G. 6

70

INCIDENT LIGHT
(FUNDAMENTAL
WAVE) 9

CYLINDRICAL
LENS 12

CYLINDRICAL
LENS 13

OUTPUT LIGHT
(SECOND
HARMONIC) 10

LASER

INCIDENT
MIRROR
51

WAVELENGTH
CONVERSION
ELEMENT
14

OUTPUT
MIRROR
52

OPTICAL
CAVITY
55

50

## F I G. 7

REFLECTING
MIRROR 63

70

INCIDENT LIGHT
(FUNDAMENTAL
WAVE) 9

OUTPUT LIGHT
(SECOND
HARMONIC) 10

LASER

INCIDENT
MIRROR
61

CYLINDRICAL
LENS 12

CYLINDRICAL
LENS 13

OUTPUT
MIRROR
62

OPTICAL
CAVITY
65

60

WAVELENGTH
CONVERSION
ELEMENT
14

## F I G. 8